## Europäisches Patentamt
## European Patent Office
## Office européen des brevets

(11) Veröffentlichungsnummer: **0 455 290 A1**

# EUROPÄISCHE PATENTANMELDUNG

(21) Anmeldenummer: 91200973.5

(22) Anmeldetag: 23.04.91

(51) Int. Cl.⁵: **G02B 6/38**

(30) Priorität: **27.04.90 DE 4013455**

(43) Veröffentlichungstag der Anmeldung:
**06.11.91 Patentblatt 91/45**

(84) Benannte Vertragsstaaten:
**CH DE FR GB LI**

(71) Anmelder: **Philips Patentverwaltung GmbH**
**Wendenstrasse 35 Postfach 10 51 49**
**W-2000 Hamburg 1(DE)**
(84) **DE**

Anmelder: **N.V. Philips' Gloeilampenfabrieken**
**Groenewoudseweg 1**
**NL-5621 BA Eindhoven(NL)**
(84) **CH FR GB LI**

(72) Erfinder: **Serapins, Klaus**
**Steinbrecherweg 27**
**W-5060 Bergisch-Gladbach(DE)**
Erfinder: **Lukowski, Stefan**
**Heinestrasse 14**
**W-4020 Mettmann(DE)**
Erfinder: **Nowatzek, Margarete**
**Bergerstrasse 157**
**W-5000 Köln 90(DE)**

(74) Vertreter: **Koch, Ingo, Dr.-Ing. et al**
**Philips Patentverwaltung GmbH**
**Wendenstrasse 35 Postfach 10 51 49**
**W-2000 Hamburg 1(DE)**

(54) Optisches Steckerelement und Verfahren zu seiner Herstellung.

(57) Die Erfindung betrifft ein optisches Steckerelement, welches ein Röhrchen (4) umfaßt, in dessen zentraler Bohrung ein Lichtwellenleiter (LWL 3) derart befestigt ist, daß ein Abschnitt des LWL mit vorgewölbter Stirnfläche (5) aus dem Röhrchen (4) hervorragt. Ein solches Steckerelement wird dadurch einfach herstellbar und mechanisch widerstandsfähig, daß der LWL (3) in der zentralen Bohrung des Röhrchens (4) über einen kapillaren Spalt (7) verklebt ist, welcher Spalt derart bemessen ist, daß der Kleber in flüssigem Zustand durch Kapillarkräfte einziehbar ist.

EP 0 455 290 A1

FIG.1

Die Erfindung bezieht sich auf ein optisches Steckerelement, welches ein Röhrchen umfaßt, in dessen zentraler Bohrung ein Lichtwellenleiter derart befestigt ist, daß ein Abschnitt des LWL mit vorgewölbter Stirnfläche aus dem Röhrchen hervorragt.

Bei einer durch JP-KOKAI 58-184 910 bekannten derartigen Anordnung ragt eine linsenartig vorgewölbte Stirnfläche eines Lichtwellenleiters aus einem umgebenden Röhrchen hervor. Die Vorwölbung wird durch Erhitzung des LWL gebildet. Dabei wird gleichzeitig der Endbereich des LWL an die Innenwandung des Röhrchens gelegt und befestigt. Da der LWL nur am Ende des Röhrchens mit diesem verbunden ist, kann die Verbindungsstelle leicht beschädigt werden, insbesondere dann, wenn bei einer optischen Verbindung die vorgewölbten Flächen zweier Steckerelemente aneinandergedrückt werden.

Vorgewölbte Stirnflächen werden nicht nur zur Erzielung einer Linsenwirkung bei sogenannten Linsensteckern, welche sich nicht direkt berühren, benötigt, sondern auch bei direkt kontaktierenden Steckern. Dabei muß selbstverständlich ebenfalls eine gute optische Oberfläche vorhanden sein. Die auf den optischen Achsen befindlichen, am weitesten vorgewölbten Punkte der Stirnflächen zweier Stecker werden zur Herstellung einer optischen Kopplung aneinandergedrückt.

Zur Herstellung solcher Stecker mit vorgewölbter Stirnfläche wurden bisher zunächst Lichtwellenleiter in einem Röhrchen verklebt. Dabei wurde Kleber in das Röhrchen eingebracht. Danach wurde der Lichtwellenleiter durch das Röhrchen hindurchgeschoben. Durch einen entsprechenden Schleifvorgang wurde die Innenkontur des aus Lichtwellenleiter und Röhrchen bestehenden Steckerelements ballig geschliffen. Beim Klebevorgang auf die Stirnfläche des LWL gebrachter Kleber wird dabei natürlich weggeschliffen.

Der Erfindung liegt die Aufgabe zugrunde, ein Steckerelement der eingangs genannten Art derart zu gestalten, daß es einfach herstellbar und mechanisch wiederstandsfähig ist.

Die Lösung gelingt dadurch, daß der LWL in der zentralen Bohrung des Röhrchens über einen kapillaren Spalt verklebt ist, welcher Spalt derart bemessen ist, daß der Kleber in flüssigem Zustand durch Kapillarkräfte einziehbar ist.

Die erfindungsgemäße Lösung hat den Vorteil, daß der LWL in einem großen Längenbereich des Röhrchens angeklebt und deshalb ungefährdet gehalten ist. Beim Klebevorgang wird die mit einer Vorwölbung hergestellte Stirnfläche des LWL nicht mit Kleber verschmutzt, so daß eine optisch einwandfreie Stirnfläche ohne Nachbearbeitung erhalten bleibt.

Besonders vorteilhaft ist es zu diesem Zweck, daß der LWL mit einem zylindrischen Längenabschnitt aus der zentralen Bohrung des Röhrchens herausragt. Dadurch wird mit Sicherheit verhindert, daß der durch Kapillarkräfte in den Spalt zwischen LWL und Röhrchen kriechende Kleber bis in den Bereich der vorgewölbten Stirnfläche des LWL vordringt.

Bei einer bevorzugten Lösung ist vorgesehen, daß das Röhrchen im mittleren Bereich eine Einführungsbohrung für den flüssigen Kleber aufweist. Dann kann in den mittleren Bereich des Röhrchens zugeführter Kleber sich am besten über den gesamten Spalt verteilen. Es hat sich gezeigt, daß eine solche Bohrung einfach realisiert werden kann durch Schleifen eines radialen Spaltes in das Röhrchen.

Wenn das Röhrchen aus UV-durchlässigem Glas oder Keramik besteht, kann vorteilhaft ein durch UV-Licht aushärtender Kleber verwendet werden, welcher nach der Benetzung des Spaltes besonders schnell und einfach ausgehärtet werden kann, bevor ein Weiterkriechen des Klebers in den Bereich der vorgewölbten Stirnfläche des LWL möglich ist.

Wenn das Röhrchen aus nicht-UV-durchlässigem Material wie z.B. Metall besteht, wird vorteilhaft eine durch Wärme aushärtender Kleber verwendet. Insbesondere Zweikomponenten-Epoxy-Kleber sind in solchem Fall sehr geeignet, da sie eine gute Langzeitstabilität aufweisen.

Bei einer bevorzugten Verwendungsart des erfindungsgemäß hergestellten Steckerelements zur Bildung eines robusten Steckerstiftes ist vorgesehen, daß das Röhrchen in die Bohrung eines Steckerstiftes derart eingesetzt ist, daß ein kurzer zylindrischer Längenabschnitt des Röhrchens aus der Bohrung des Steckerstiftes hervorragt. Auch beim Einkleben des Röhrchens kann der Kleber nicht zu weit in die Nähe der Vorwölbung des LWL vordringen.

Ein vorteilhaft für die Herstellung erfindungsgemäßer Steckerelemente geeignetes Verfahren ist dadurch gekennzeichnet, daß zunächst die Stirnfläche des LWL mit einer vorgewölbten Kontur versehen und danach der LWL durch die zentrale Bohrung des Röhrchens geschoben wird, bis ein kurzer Abschnitt des LWL aus dem Röhrchen hervorragt, und daß danach Kleber in flüssigem Zustand in den zwischen LWL und zentraler Bohrung des Röhrchens vorgesehenen kapillaren Spalt an einer der Austrittsfläche des LWL entfernten stelle zugeführt wird, und daß der Kleber schließlich ausgehärtet wird.

Die Erfindung wird anhand der Beschreibung eines in der Zeichnung dargestellten bevorzugten Ausführungsbeispiels näher erläutert.

Fig. 1 zeigt einen Längsschnitt durch einen Steckerstift, in welchen ein erfindungsgemäß gestaltetes Steckerelement eingeklebt ist.

Fig. 2 zeigt in vergrößertem Maßstab die Umgebung der Stirnfläche des LWL.

Der Endbereich einer optischen Leitung 1 ist von ihrer Umhüllung 2 befreit, so daß ein Längenabschnitt des Monomode-LWL 3 herausragt, welcher dann in ein Röhrchen 4 eingeklebt ist.

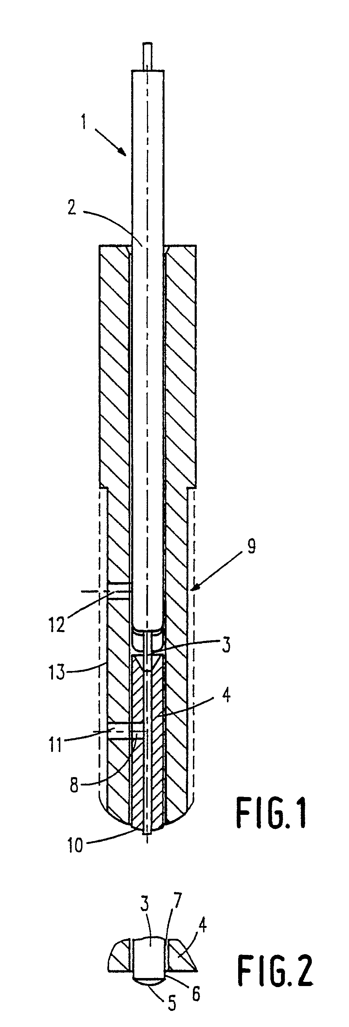

Wie Fig. 2 näher erkennen läßt, ragt dabei zumindest die vorgewölbte Stirnfläche 5 des LWL 3, aber vorteilhaft auch ein kurzer zylindrischer Abschnitt 6 aus dem Röhrchen 4 stirnseitig hervor. Der sich wegen kapillarer Saugkraft im Spalt 7 zwischen LWL 3 und Röhrchen 4 ausbreitende Kleber gelangt dann mit Sicherheit nicht an die vorgewölbte Stirnfläche 5 des LWL 3.

Flüssiger Kleber wird durch die radiale Öffnung 8 des Röhrchens 4 dem Spalt zugeführt, nachdem vorher der LWL 3 mit fertig bearbeiteter Stirnfläche durch das Röhrchen 4 geschoben wurde. Gemäß einer alternativen Lösung wäre es auch möglich, Kleber von der der Stirnfläche des LWL 3 abgewandten Endseite des Röhrchens in den Spalt 7 einzuführen. Die Endseite ist dazu trichterförmig gebildet.

Selbstverständlich ist die Viskosität in Abhängigkeit der Spaltbreite zwischen dem LWL und der Innenwand des Röhrchens zu wählen. Die Spaltbreite sollte kleiner als 10 mikron sein. Wenn größere Spaltbreiten gewählt werden können Zentrierprobleme entstehen bei der spanabhebende Nachbearbeitung der Außenwand des Steckerelements. Die Spaltbreite ist vorzugsweise größer als 0,25 mikron. Damit wird erreicht, daß ein LWL leicht in das Röhrchen einschiebbar ist. Es hat sich gezeigt, daß Spaltbreiten von 1 - 5 mikron besonders vorteilhaft geeignet sind. Zur Verwendung in den obengenannten Spalten sind dünnflüssige Kleber sehr geeignet, insbesondere Kleber mit einer Viskosität von weniger als 10.000 cps bei Raumtemperatur. Die Verteilung des Klebers im Spalt kann dadurch erleichtert werden, daß der LWL in der Bohrung 4 hin und her geschoben wird, beispielsweise durch Vibration. Diese Maßnahme ist jedoch nicht notwendig, wenn Kleber mit einer Viskosität von weniger als 2000 cps bei Raumtemperatur verwendet werden.

Für das Ausführungsbeispiel wurde ein für UV-Licht durchlässiges Glasröhrchen gewählt, so daß UV-aushärtender Kleber verwendet werden konnte. In einem Fall wurde ein Akrylatderivat (optischer Kleber Nr. 68 der Firma Norland) mit einer Viskosität von 5000 cps bei Raumtemperatur verwendet. Dieser Kleber wurde mittels Vibration oder Erwärmung in Spalte mit einer Breite von 1 - 5 mikron gut eingezogen. In einem anderen Beispiel wurde ein Akrylatderivat (optischer Kleber Nr. 61 der Firma Norland) mit einer Viskosität von 300 cps bei Raumtemperatur gewählt. Dieser war ohne Vibration oder Erwärmung leicht in den Spalt einziehbar.

Vor dem Aushärten des Klebers muß das gewünschte Ausmaß, um welches der LWL 3 aus dem Röhrchen 4 hervorragen soll, (vorzugsweise weniger als um eine Durchmesserlänge des LWL 4) durch geeignete Mittel fixiert werden. Für solche Zwecke geeignete Vorrichtungen sind dem Fachmann grundsätzlich bekannt.

Zur Bildung eines Steckerstifts sind die optische Leitung 1 und insbesondere das den LWL 3 aufnehmende Röhrchen 4 in einen Steckerstift 9 eingeklebt. Der Steckerstift 9 besteht vorzugsweise aus Schwermetall. Aus dem gleichen Grunde, wie bezüglich LWL 3 und Röhrchen 4 erläutert, ragt dabei auch das Röhrchen 4 mit einem zylindrischen Abschnitt 10 geringfügig aus dem Steckerstift hervor.

Zur Verklebung des Röhrchens 4 sowie der Umhüllung 2 der optischen Leitung 1 in der Bohrung des Steckerstifts 9 wird Kleber durch die Zuführungsöffnungen 11 und 12 des steckerstifts 9 eingeführt. Nach dem Aushärten des Klebers wird die verjüngte Mantelfläche 13 des Steckerstifts 9 durch spanabhebende Bearbeitung hergestellt, wobei das Bearbeitungswerkzeug in bekannter Weise zur optischen Achse des LWL 3 zentrierbar ist. Zu diesem Zweck sind dem Fachmann eine Vielzahl verschiedenartiger Vorrichtungen bekannt, wie z.B. beschrieben in EP-A 0 207.552.

**Patentansprüche**

1. Optisches Steckerelement, welches ein Röhrchen (4) umfaßt, in dessen zentraler Bohrung ein Lichtwellenleiter (LWL 3) derart befestigt ist, daß ein Abschnitt des LWL mit vorgewölbter Stirnfläche (5) aus dem Röhrchen (4) hervorragt,
dadurch gekennzeichnet, daß der LWL (3) in der zentralen Bohrung des Röhrchens (4) über einen kapillaren Spalt (7) verklebt ist, welcher Spalt derart bemessen ist, daß der Kleber in flüssigem Zustand durch Kapillarkräfte einziehbar ist.

2. Steckerelement nach Anspruch 1,
dadurch gekennzeichnet, daß der LWL (3) mit einem zylindrischen Längenabschnitt (6) aus der zentralen Bohrung des Röhrchens (4) herausragt.

3. Steckerelement nach Anspruch 1 oder 2,
dadurch gekennzeichnet, daß das Röhrchen (4) im mittleren Bereich eine Einführungsbohrung (8) für den flüssigen Kleber aufweist.

4. Steckerelement nach einem der Ansprüche 1 bis 3,

dadurch gekennzeichnet, daß das Röhrchen (4) aus für UV-Licht durchlässigem Glas besteht, und daß der Kleber mittels UV-Licht ausgehärtet ist.

5. Steckerelement nach einem der Ansprüche 1 bis 4, dadurch gekennzeichnet, daß das Röhrchen (4) in die Bohrung eines Steckerstiftes (9) derart eingesetzt ist, daß ein kurzer zylindrischer Längenabschnitt (10) des Röhrchens (4) aus der Bohrung des Steckerstiftes (9) hervorragt.

6. Verfahren zur Herstellung eines optischen Steckerelements, welches ein Röhrchen (4) umfaßt, in dessen zentraler Bohrung ein Lichtwellenleiter (3) derart befestigt ist, daß ein Abschnitt des LWL mit vorgewölbter Stirnfläche (5) aus dem Röhrchen hervorragt, dadurch gekennzeichnet, daß zunächst die Stirnfläche (5) des LWL (3) mit einer vorgewölbten Kontur versehen und danach der LWL (3) durch die zentrale Bohrung des Röhrchens (4) geschoben wird, bis ein kurzer Abschnitt (6) des LWL (3) aus dem Röhrchen hervorragt, und daß danach Kleber in flüssigem Zustand in den zwischen LWL (3) und zentraler Bohrung des Röhrchens (4) vorgesehenen kapillaren Spalt (7) an einer der Austrittsfläche des LWL (3) entfernten Stelle zugeführt wird, und daß der Kleber schließlich ausgehärtet wird.

7. Verfahren nach Anspruch 6, dadurch gekennzeichnet, daß ein durch Strahlung, insbesondere UV-Licht aushärtbarer Kleber verwendet wird, welcher unmittelbar nach der Benetzung der Klebeflächen ausgehärtet wird.

FIG.1

FIG.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | PATENT ABSTRACTS OF JAPAN Band 9, Nr. 232 ((P-389), 18. September 1985; & JP - A - 60087304 (FUJITSU K.K.) 17.05.1985 – – – | 1-3,6,7 | G 02 B 6/38 |
| Y | DE-A-3 441 300 (SIEMENS) * Zusammenfassung; Ansprüche 1-3; Abbildung 3; Seite 11, Zeilen 1-11 * | 1-3,6,7 | |
| A | – – – | 4 | |
| A | EP-A-0 301 775 (THOMAS & BETTS) * Spalte 5, Zeilen 10-16; Spalte 5, Zeile 32 - Spalte 6, Zeile 33; Abbildungen 3,4 * – – – | 1,5 | |
| A | WO-A-9 001 175 (NIPPON ELECTRIC GLASS) * Zusammenfassung; Abbildung 3 * – – – – – | 4,7 | |

| | RECHERCHIERTE SACHGEBIETE (Int. Cl.5) |
|---|---|
| | G 02 B |

Der vorliegende Recherchenbericht wurde für alle Patentansprüche erstellt

| Recherchenort | Abschlußdatum der Recherche | Prüfer |
|---|---|---|
| Berlin | 26 Juni 91 | HYLLA W R |